(19) Europäisches Patentamt
European Patent Office
Office européen des brevets

(11) Publication number: 0 042 204
A2

(12) EUROPEAN PATENT APPLICATION

(21) Application number: 81301434.7

(22) Date of filing: 02.04.81

(51) Int. Cl.³: C 09 B 62/09, D 06 P 3/66

(30) Priority: 18.06.80 GB 8019871

(43) Date of publication of application: 23.12.81
Bulletin 81/51

(84) Designated Contracting States: BE CH DE FR GB IT LI NL

(71) Applicant: IMPERIAL CHEMICAL INDUSTRIES LIMITED,
Imperial Chemical House Millbank, London SW1P 3JF (GB)

(72) Inventor: Andrew, Herbert Francis, 120 Grove Lane, Hale Cheshire WA15 8LS (GB)
Inventor: Barlow, Clive Hugh, 4 Sunningdale Drive, Heywood Lancashire OL10 2DA (GB)

(74) Representative: Marklow, Raymond Joseph et al,
Imperial Chemical Industries Limited Legal Department: Patents Thames House North Millbank, London SW1P 4QG (GB)

(54) **Reactive dyestuffs.**

(57) Cellulose reactive dyes which in the free acid form are of the formula:

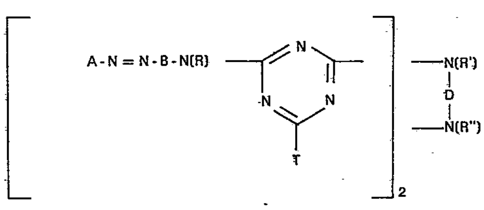

(1)

wherein A is

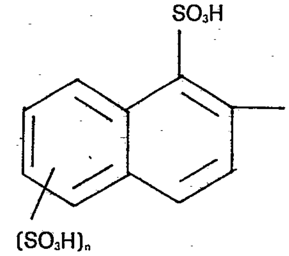

where n is 1 or 2;

B is

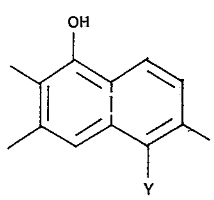

where Y is H, Cl or $SO_3H$;
R is H or $C_{1-4}$ normal alkyl;
R' and R'' are each independently H, $CH_3$ or $C_2H_5$;
T is Cl, Br, F, $SO_3H$ or a quaternary ammonium group; and

D is

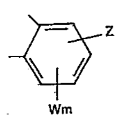

where Z is H, $SO_3H$, or COOH; m is 1 or 2; and W is H, Cl, $CH_3$ or $OCH_3$.

These dyes are valuable for the colouration of cellulose textiles showing good strength and build up.

EP 0 042 204 A2



COMPLETE DOCUMENT

This invention relates to reactive dyes in particular to triazinyl dyes linked by the residue of an ortho phenylene diamine.

It is now well established to manufacture cellulose reactive dyestuffs whose structure is essentially

$$[\text{Chrom} - N(R) - G -]_2 = N(R')N(R'')D$$

where Chrom is the radical of a chromophoric compound; R, R' and R'' are H or lower alkyl; G is s-triazine residue bearing a cellulose reactive substituent and N(R')N(R'')D is the N,N'-di-radical of a diamine. Many aliphatic and aromatic diamines have been proposed to provide D. See for example UK 854432 and 1283771. It has often been proposed to use optionally substituted phenylene diamines. These have almost always been the meta- or para-isomers but recent publications - Japanese 78/060935 and 77/085585 and German OLS 2658268 - have shown the use of ortho phenylene diamines.

We have now found a novel class of reactive dyes derived from ortho phenylene diamines which are often associated with good strength and build up.

According to the present invention there are provided cellulose reactive dyestuffs which in the free acid form are of the formula:

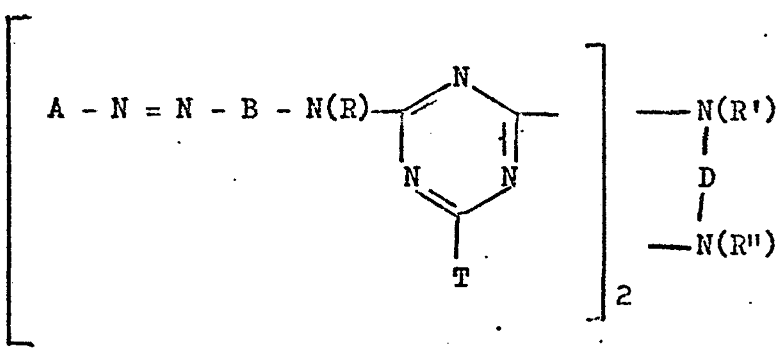

(1)

wherein A is

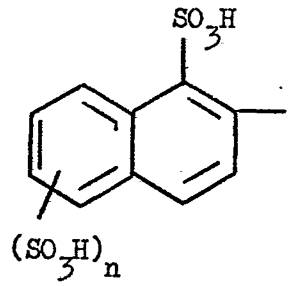

where n is 1 or 2;

B is

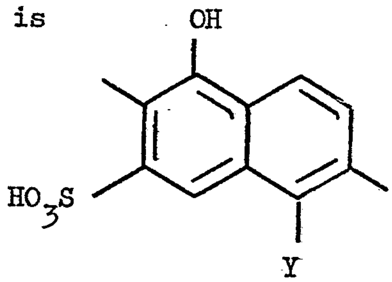

where Y is H, Cl or $SO_3H$;

R is H or $C_{1-4}$ normal alkyl;

R' and R" are each independently H, $CH_3$ or $C_2H_5$;

T is Cl, Br, F, $SO_3H$ or a quaternary ammonium group;

and D is

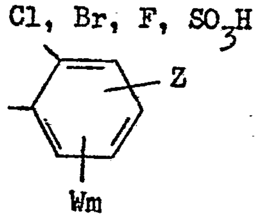

where Z is H, $SO_3H$, or COOH; m is 1 or 2; and W is H, Cl, $CH_3$ or $OCH_3$.

As examples of the group A there may be mentioned

1,5-disulphonaphth-2-yl

1,6-disulphonaphth-2-yl

1,5,7-trisulphonaphth-2-yl.

As examples of the group B there may be mentioned
1-hydroxy-3-sulpho-2,6-naphthylene
1-hydroxy-3,5-disulpho-2,6-naphthylene
1-hydroxy-5-chloro-3-sulpho-2,6-naphthylene.

The term "quaternary ammonium group" in the definition of T above embraces any group which comprises a positively charged nitrogen atom linked to the triazine nucleus and bearing three substituent bonds which may link to separate groups or two or three of them may link to different atoms of a single group so that with the nitrogen atom a heterocyclic ring is formed. Thus the term embraces, for example trialkyl ammonium groups such as trimethyl- or ethyl dimethyl ammonium and pyridinium groups. It is often preferred that the group is a carboxy pyridinium group, for example that derived from nicotinic acid.

As examples of the group D there may be mentioned
1,2-phenylene
4-methyl-1,2-phenylene
4-methoxy-1,2-phenylene
4-sulpho-1,2-phenylene
4-carboxy-1,2-phenylene
3,4-dimethyl-1,2-phenylene
4,5-dimethyl-1,2-phenylene

Preferred dyes of formula (1) are those having one or more of the following features:

(a) A is 1,5-disulphonaphth-2-yl

(b) B is 1-hydroxy-3,5-disulpho- or especially 1-hydroxy-3-sulpho-2,6-naphthylene

(c) T is F or especially Cl

(d) R is $CH_3$ or especially H

(e) one of R' and R'' is $CH_3$ and the other H or especially both are H

**(f) D is defined by having Z = H or sulpho, m = 1 and W = H or methyl i.e. ortho phenylene, sulphophenylene or tolylene radicals.**

The present invention also provides a process for the manufacture of dyes of formula (1) in which T is Cl, Br or F which comprises reacting a diamine of the formula:

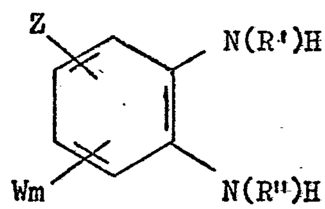

(2)

with two moles of a triazinyl compound of the formula

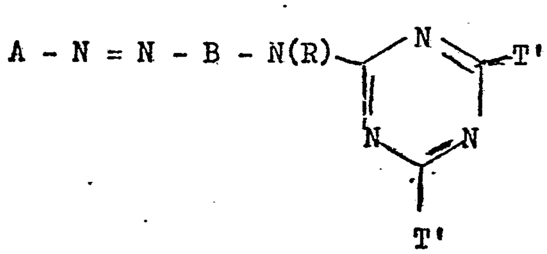

(3)

where A, B, R, R', R'', W, Z and m have the meanings given above and T' is Cl, Br or F.

This process can conveniently be carried out by stirring the reactants in an aqueous medium, optionally in the presence of a water-soluble organic solvent, at a temperature of from 20-60°C, and preferably maintaining the pH at from 5-8 by adding an acid-binding agent to neutralise the hydrogen halide formed during the reaction. Suitable acid-binding agents are alkali metal hydroxides, carbonates and bicarbonates.

As examples of diamines of formula (2) there may be mentioned

1,2-phenylene diamine
4-methyl-1,2-phenylene diamine
4-methoxy-1,2-phenylene diamine
4-sulpho-1,2-phenylene diamine
4-carboxy-1,2-phenylenediamine
3-methyl-1,2-phenylenediamine
3,4-dimethyl-1,2-phenylenediamine
4,5-dimethyl-1,2-phenylenediamine
N-methyl-1,2-phenylenediamine
N,N'-dimethyl-1,2-phenylenediamine
5-sulpho-1-amino-2-N-methylaminobenzene.

Triazinyl compounds of formula (3) may be conveniently obtained, for example, by reacting cyanuric chloride at 0-20°C in an aqueous medium, with an aminoazo compound of the formula

$$A - N = N - B - N(R)H$$

These aminoazo compounds can themselves be obtained by a conventional coupling reaction with the diazonium salt of a naphthylamine $A.NH_2$ and an aminonaphthol HBN(R)H.

With the aminonaphthols necessary to give the dyes of the present invention it is usual to acetylate the amino group before coupling and remove the acetyl group by hydrolysis after coupling. Alternatively the aminonaphthol may be first reacted with the cyanuric halide then coupled with the diazonium salt of $ANH_2$ to give the triazinyl compound of formula (3).

As examples of naphthylamines $A.NH_2$ there may be mentioned:

2-naphthylamine-1,5-disulphonic acid

2-naphthylamine-1,6-disulphonic acid

2-naphthylamine-1,5,7-trisulphonic acid.

As examples of aminonaphthols HB.N(R)H there may be mentioned:

2-amino-5-hydroxy-7-sulphonaphthalene

2-N-methylamino-5-hydroxy-7-sulphonaphthalene

2-amino-5-hydroxy-1,7-disulphonaphthalene

2-N-ethylamino-5-hydroxy-7-sulphonaphthalene

2-N-butylamino-5-hydroxy-7-sulphonaphthalene

2-amino-1-chloro-5-hydroxy-7-sulphonaphthalene

The dyes of the present invention may also be manufactured by reacting the diamine of formula (2) with two moles of cyanuric halide followed by two moles of the aminoazo compound A-N=N-B-N(R)H. This process is usually only of any interest when the diamine of formula (2) bears a water-solubilising group.

The present invention further provides a process for the manufacture of dyes of formula (1) in which T is $SO_3H$ or a quaternary ammonium group which comprises reacting a dye of formula (1) in which T is Cl, Br or F with an alkali metal hydrogen sulphite or the appropriate tertiary amine or pyridine compound. Such a reaction is normally carried out in aqueous media at 30° to 100°C.

The dyestuffs prepared by the above processes may be isolated by any conventional means, e.g. spray drying or precipitation and filtration.

The dyes are represented above in their free acid form and may be sometimes isolated as such. However, it is usually found more convenient to isolate the dyes in the form of salts particularly alkali metal salts, especially sodium.

The dyestuffs of the present invention may be used for colouring a wide range of textile materials containing hydroxyl or amino groups, e.g. wool, silk, synthetic polyamides and natural or regenerated cellulose, for example cotton or viscous rayon materials, by conventional methods used for colouring such materials with water-soluble reactive dyes, e.g. in the case of cellulose they are preferably applied in conjunction with a treatment with an acid binding agent, e.g. caustic soda, sodium carbonate, phosphate, silicate or bicarbonate, which may be applied to the cellulose textile materials before, during or after the application of the dyestuff.

The dyes of the present invention are valuable reactive dyes for cellulose. They yield coloured textiles with good resistance to washing and light. They are usually characterised by good strength and an ability to build-up to high depths of shade. In this last respect they show unexpected superiority over closely related known dyes.

The invention is illustrated by the following Examples in which all parts are by weight and % proportions in wt/vol are grams/100 millilitres.

Example 1

To a neutral solution of 12.8 parts of the trisodium salt of 2-2',4'-dichloro-s-triazin-6'-ylamino-6-1",5"-disulphonaphth-2"-ylazo-5-naphthol-7-sulphonic acid prepared as described in Example 1 of United Kingdom Specification No.837990) in 300 parts of water at 10°C there are added 1.02 parts of 3,4-diaminotoluene. The reaction mixture is stirred at 40°C for 1 hour the pH being maintained at 7 by the addition of a 2N aqueous solution of sodium carbonate, when condensation is complete. Sodium chloride (5%) is added, the mixture is filtered and the residue on the filter is then dried.

The dyestuff composition so obtained is found to contain 1.0 atom of hydrolysable chlorine for each azo group present. When applied to cellulose textile materials in conjunction with treatment with an acid-binding agent, the dye shows excellent build-up properties and yields strong reddish-orange shades having excellent fastness to washing and to light.

The following Table gives further Examples of new dyestuffs of the invention which are obtained by condensing 1 molecular proportion of the dyebase listed in the second column with 1 molecular proportion of the trihalogenotriazine listed in the third column and condensing 1 molecular proportion of the dihalogenotriazinyl compound so obtained with $\frac{1}{2}$ molecular proportion of the 1,2-phenylenediamine listed in the fourth column of the Table. The shade of the dye on cellulose is given in the fifth column of the Table.

| Example | Dyebase | Trihalogeno triazine | 1,2-Phenylenediamine | Shade |
|---|---|---|---|---|
| 2 | 2-Amino-5-hydroxy-6-naphth-2'-ylazonaphthalene-1',5',7 -trisulphonic acid | Cyanuric chloride | 4-sulpho-1,2-phenylenediamine | Reddish-orange |
| 3 | " | " | 1,2-phenylenediamine | " |
| 4 | " | " | 5-sulpho-1-amino-2-N-methylaminobenzene | " |
| 5 | " | " | 4-carboxy-1,2-phenylenediamine | " |
| 6 | 2-N-methylamino-5-hydroxy-6-naphth-2'-ylazonaphthalene-1',5',7 -trisulphonic acid | " | " | " |
| 7 | " | " | 1,2-phenylenediamine | " |
| 8 | " | " | 3,4-diaminotoluene | " |
| 9 | " | " | 4-sulpho-1,2-phenylenediamine | " |
| 10 | " | Cyanuric bromide | 1,2-phenylenediamine | " |
| 11 | " | Cyanuric chloride | 2,3-diaminotoluene | " |

| Example | Dyebase | Trihalogeno triazine | 1,2-Phenylenediamine | Shade |
|---|---|---|---|---|
| 12 | 2-Amino-5-hydroxy-6-naphth-2'-ylazonaphthalene-1',5',7 -trisulphonic acid | Cyanuric chloride | Commercial product containing 97% (2,3-diaminotoluene/3,4-diaminotoluene) | Reddish-orange |
| 13 | 2-Amino-5-hydroxy-6-naphth-2'-ylazonaphthalene-1',6',7 -trisulphonic acid | " | " | " |
| 14 | " | " | 4-sulpho-1,2-phenylenediamine | " |
| 15 | 2-Amino-5-hydroxy-6-naphth-2'-ylazonaphthalene-1',5',7 -trisulphonic acid | " | 1-amino-2-N-methyl aminobenzene | " |
| 16 | " | Cyanuric fluoride | 1,2-phenylenediamine | " |
| 17 | " | " | 3,4-diaminotoluene | " |
| 18 | 2-Amino-5-hydroxy-6-naphth-2'-ylazonaphthalene-1',5',7,7'-tetrasulphonic acid | Cyanuric chloride | 1,2-phenylenediamine | " |
| 19 | " | " | 3,4-diaminotoluene | " |
| 20 | 2-Amino-1-chloro-5-hydroxy-6-naphth-2'-ylazonaphthalene-1',5',7 -trisulphonic acid | " | " | " |
| 21 | " | " | 4-sulpho-1,2-phenylenediamine | " |

| Example | Dyebase | Trihalogeno triazine | 1,2-Phenylenediamine | Shade |
|---|---|---|---|---|
| 22 | 2-Amino-5-hydroxy-6-naphth-2'-ylazonaphthalene-1,1',5',7-tetrasulphonic acid | Cyanuric chloride | 1,2-phenylenediamine | Reddish-orange |
| 23 | 2-Amino-5-hydroxy-6-naphth-2'-ylazonaphthalene-1,1',6',7-tetrasulphonic acid | " | 3,4-diaminotoluene | " |
| 24 | 2-Amino-1-chloro-5-hydroxy-6-naphth-2'-ylazonaphthalene-1',6',7-trisulphonic acid | " | 4-sulpho-1,2-phenylenediamine | " |
| 25 | " | " | 3,4-diaminoanisole | " |

Example 26

To a neutral solution of 12.1 parts of the disodium salt of 2-amino-5-naphthol-1,7-disulphonic acid in 250 parts of water at 0-5°C there is added a solution of 6.5 parts of cyanuric chloride in 60 parts of acetone. The mixture is stirred at 0-5°C for 2 hours, the pH being maintained at 4 by the careful addition of a 2N aqueous solution of sodium carbonate. The diazonium salt from 11.5 parts of the disodium salt of 2-naphthylamine-1,5-disulphonic acid, prepared in the usual way, is added to the above solution together with 2N aqueous sodium carbonate solution to hold the pH at 6.5 to 7 and the coupling mixture is stirred at 0 to 5°C for 2 hours. 4.1 Parts of 3,4-diaminotoluene are added and the mixture is stirred at 30° to 40°C for 2 hours the pH being maintained at 7 by the addition of 2N aqueous sodium carbonate solution. Sodium chloride (15% w/v) is added, the mixture is filtered and the residue on the filter is then dried.

The dyestuff, so obtained, contains 0.95 atom of hydrolysable chlorine for each azo group present. When applied to cellulose textile materials in conjunction with a treatment with an acid-binding agent, the dye shows excellent build-up properties and yields strong reddish orange shades having good fastness to washing and to light.

Example 27

The 12.1 parts of the disodium salt of 2-amino-5-naphthol-1,7-disulphonic acid and the 4.1 parts of 3,4-diaminotoluene used in Example 26 are replaced by 8.7 parts of the sodium salt of 2-amino-5-naphthol-7-sulphonic acid and 4.25 parts of the commercial product containing 97% 2,3- and 3,5-diaminotoluenes,respectively. The dyestuff

so obtained is identical in structure and dyeing properties to the product of Example 12.

Example 28

To an alkaline solution of 2.1 parts of the sodium salt of 4-sulpho-1,2-phenylene diamine in 190 parts of water (pH of solution = 11.0) there is added a solution of 3.7 parts of cyanuric chloride in 30 parts of acetone and the mixture is stirred at 0-5°C for 3 hours, the pH being maintained at 7 by the addition of a 2N aqueous solution of sodium carbonate. 12.35 Parts of the trisodium salt of 2-amino-5-hydroxy-6-naphth-2'-ylazonaphthalene-1",5",7-trisulphonic acid are added and the mixture is stirred at 40-50°C for 18 hours the pH being maintained at 7 by the addition of a 2N aqueous solution of sodium carbonate. Sodium chloride (20% w/v) is added, the mixture is filtered and the residue on the filter is then dried.

The dyestuff composition so obtained contains 0.95 atom of hydrolysable chlorine for each azo group present. When applied to cellulose textile materials in conjunction with a treatment with an acid-binding agent, the dye yields reddish orange shades identical to those of Example 2.

Example 29

To a solution of 7.9 parts of the hexa sodium salt of the product of Example 1 in 130 parts of water there are added 2.8 parts of the sodium salt of 3-carboxypyridine and the reaction mixture is stirred at 85°C for 3 hours. Sodium chloride (20% w/v) is added, the mixture is filtered and the residue on the filter is then dried.

The dyestuff so obtained, when applied to cellulose textile materials in conjunction with treatment with an acid-binding agent, yields reddish orange shades having excellent fastness to washing and to light.

The following Table gives further Examples of the invention which are obtained by replacing the 7.9 parts of the product of Example 1 used in Example 29 by an equimolar proportion of the compound listed in the second column, replacing the 2.8 parts of the sodium salt of 3-carboxypyridine by an equimolar proportion of the tertiary amine listed in the third column and effecting the reaction under the conditions indicated in the fourth column of the Table. The shade of the dye is given in the fifth column of the Table.

| Example | Bis monochloro-s-triazinyl compound | Tertiary amine | Reaction Conditions | Shade |
|---|---|---|---|---|
| 30 | Product of Example 14 | Trimethylamine | 15 minutes at 20°C. | Reddish-orange |
| 31 | Product of Example 3 | Pyridine | 1 hour at 90°C. | " |
| 32 | Product of Example 1 | DABCO | 15 minutes at 25°C. | " |
| 33 | Product of Example 12 | 3-carboxypyridine | 3 hours at 85°C. | " |

CLAIMS

1. Cellulose reactive dyes which in the free acid form are of the formula:

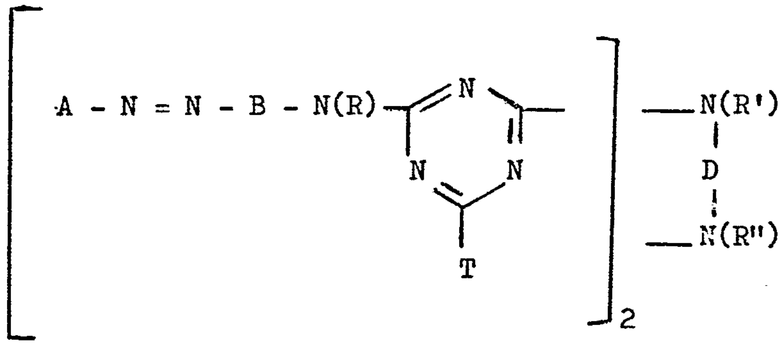

(1)

wherein A is

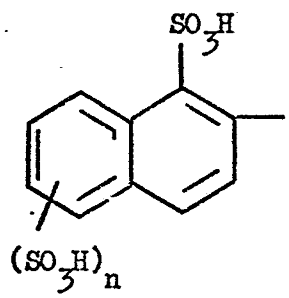

where n is 1 or 2;

B is

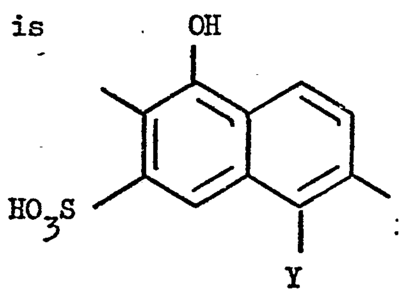

where Y is H, Cl or $SO_3H$;

R is H or $C_{1-4}$ normal alkyl;

R' and R" are each independently H, $CH_3$ or $C_2H_5$;

T is Cl, Br, F, $SO_3H$ or a quaternary ammonium group;

and D is 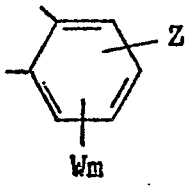

where Z is H, $SO_3H$, or COOH; m is 1 or 2; and W is H, Cl, $CH_3$ or $OCH_3$.

2. Dyes as claimed in claim 1 in which A is 1,5-disulphonaphth-2-yl.

3. Dyes as claimed in claims 1 or 2 in which B is 1-hydroxy-3,5-disulpho- or 1-hydroxy-3-sulpho-2,6-naphthylene.

4. Dyes as claimed in any one of claims 1 to 3 in which T is F or Cl.

5. Dyes as claimed in any one of claims 1 to 4 in which R is H or $CH_3$ and one of R' and R" is H or $CH_3$ and the other is H.

6. Dyes as claimed in any one of claims 1 to 6 in which Z is H or $SO_3H$, m is 1 and W is H or methyl.

7. Dyes as claimed in claim 1 and herein particularly described in any one of the Examples.

8. A process for the manufacture of dyes as claimed in claim 1 in which T is Cl, Br or F which comprises reacting a diamine of the formula:

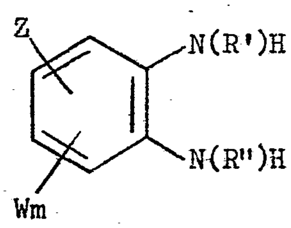

(2)

with two moles of a triazinyl compound of the formula:

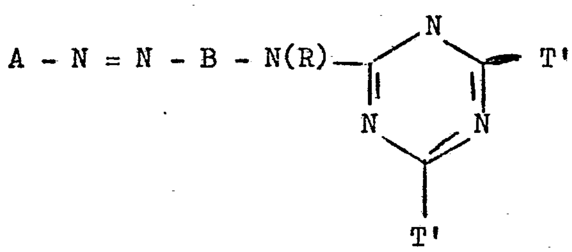

(3)

where A, B, R, R', R", W, Z and m have the meanings given in claim 1 and T' is Cl, Br or F.

9. A process for the manufacture of dyes as claimed in claim 1 in which T is $SO_3H$ or a quaternary ammonium group which comprises reacting a dye of formula (1) in which T is Cl, Br or F with an alkali metal hydrogen sulphite or the appropriate tertiary amine or pyridine compound.

10. A process for the colouration of cellulose textile materials which comprises applying dyestuffs as claimed in claim 1 in conjunction with a treatment with an acid binding agent.

RJM/BH
26.3.81.